# EUROPEAN PATENT SPECIFICATION

(11) **EP 1 229 687 B1**
(45) Date of publication and mention of the grant of the patent: **28.07.2010**
(21) Application number: 01309638.3
(22) Date of filing: 15.11.2001
(51) Int. Cl.: H04L 12/28

(54) **System for providing a service to a device in a home network and method thereof**
System und Verfahren zum Bereitstellen eines Dienstes für ein Gerät im einem Hausnetz
Systeme et procedé pour fournir un service à un dispositif dans un reseau domestique

(30) Priority: 03.02.2001 KR 2001005288
(43) Date of publication of application: 07.08.2002
(73) Proprietor: SAMSUNG ELECTRONICS CO., LTD., Suwon-city, Kyungki-do (KR)
(72) Inventor: Choi, Moon-jeong, Paldal-gu, Suwon.city, Kyungki-do (KR)
(74) Representative: Robinson, Ian Michael

(56) References cited:
- EP-A- 1 069 730
- WO-A-99/34339

## Description

The present invention relates to a method for providing a service via the Internet, and more particularly, to a system for externally providing a service to a specific device in a home network and a method thereof.

Recently, as communication techniques have been developed, a number of information and communication devices such as a computer, fax, modem or telephone are connected through a network in a relatively small space such as a SOHO (Small Office Home Office).

In addition to the information and communication devices such as the computer, fax, modem or telephone, continuous studies have been made about controlling a home network from an external location, i.e., controlling A/V (Audio Visual) devices such as a TV, DVD (Digital Video Disk), or VCR (Video Cassette Recorder) and consumer devices such as a rice cooker, a refrigerator or a washer that are connected through the network from a location external to a home.

Hereinafter, the network established in the SOHO and the home will be called a home network for ease of explanation.

In an exemplary method of establishing such a home network, a common virtual environment is established, termed middleware, for devices scattered in the house and an application is provided to the middleware.

Examples of a middleware system proposed up to now include UpnP (Universal Plug and Play), HAVi (Home AV interoperability), Jini, Home Wide Web, etc.

HAVi is designed based upon IEEE1394 (Institute of Electrical and Electronics Engineers 1394) and has a problem that inter-networking or mutual communication among networks cannot be suitably realized.

Also, while being able to internetwork using a TCP/IP protocol, UPnP and Jini mainly perform networking between a PC and a PC external device and have difficulty in real time transmitting data (video/audio data) among digital consumer devices.

EP-A-1,069,730 discloses a system for remotely controlling a telecommunications system.

WO99/3433 discloses a system having a plurality of devices in a customer premises to which computational and database resources are provided through an externally provided central control facility. The appended claims have been characterised based on this document.

An aim of the present invention is to solve or at least reduce the foregoing problems and preferably to provide a system for providing service to a device in a home network which can transmit data and is capable of internetworking or externally communicating with devices connected in the home network, and a method thereof.

According to the present invention there is provided a system and a method as set forth in the appended claims. Other features of the invention will be apparent from the dependent claims, and the description which follows.

For a better understanding of the invention, and to show how embodiments of the same may be carried into effect, reference will now be made, by way of example, to the accompanying diagrammatic drawings in which:
Figure 1 shows the construction of a system for providing a service to a device in a home network according to a preferred embodiment of the present invention;
Figure 2 shows the construction of the home network shown in Figure 1;
Figure 3 shows a push service as an example of a service provided by a remote service providing server shown in Figure 1, wherein Figure 3A shows a service for transmitting a news flash in a certain period to a digital TV, and Figure 3B shows a service for transmitting an information in a certain period to an embedded web refrigerator where a web browser is installed;
Figure 4 shows an example of a service registration table which is stored in a remote service providing server shown in Figure 1;
Figure 5 is a flow chart for showing a service providing process of a remote service providing server;
Figure 6 is a flow chart for showing a service message transmitting process of an Internet connection providing server;
Figure 7 is a flow chart for showing a service message transmitting process of a lookup server in the home network;
Figure 8 shows a signal flow of a method for providing a service to the home network according to a preferred embodiment of the present invention;
Figures 9A through 9D show program source code of an example of a master.dtd which is stored in the lookup server; and
Figure 10A shows source code of a service message, and Figure 10B shows source code of a service response message.

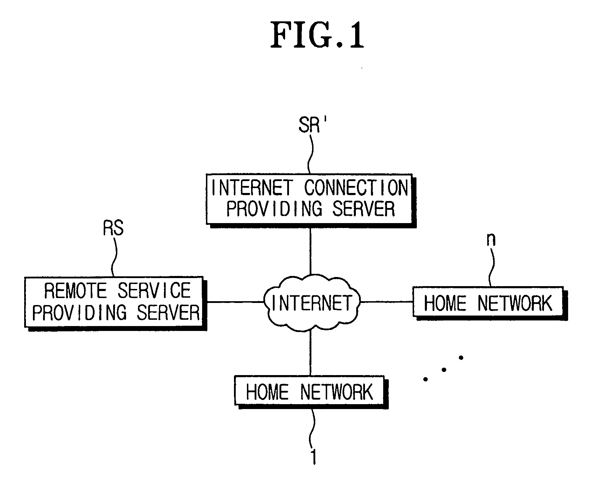

Figure 1 shows the construction of a system for providing a service to devices in a home network according to a preferred embodiment of the present invention.

As shown in Figure 1, a remote service providing server RS and an Internet connection providing server SR' are connected to a number of home networks (1, ..., n) via the Internet.

The remote service providing server RS exists outside the home networks, and provides services through the Internet. In particular, the remote service providing server RS serves the devices that are connected in the home networks and registered for service with the remote service providing server RS.

The devices in the home networks can register for the remote service providing server RS or cancel the registration on-line or off-line.

The Internet connection providing server SR' allocates global IP addresses to the home networks, and stores ID (e.g., URL) of the home networks and the global IP addresses allocated to the home networks.

The Internet connection providing server SR' processes messages provided from the home networks, and processes a service message received from the remote service providing server RS.

The construction of the home networks will be described in detail as follows:

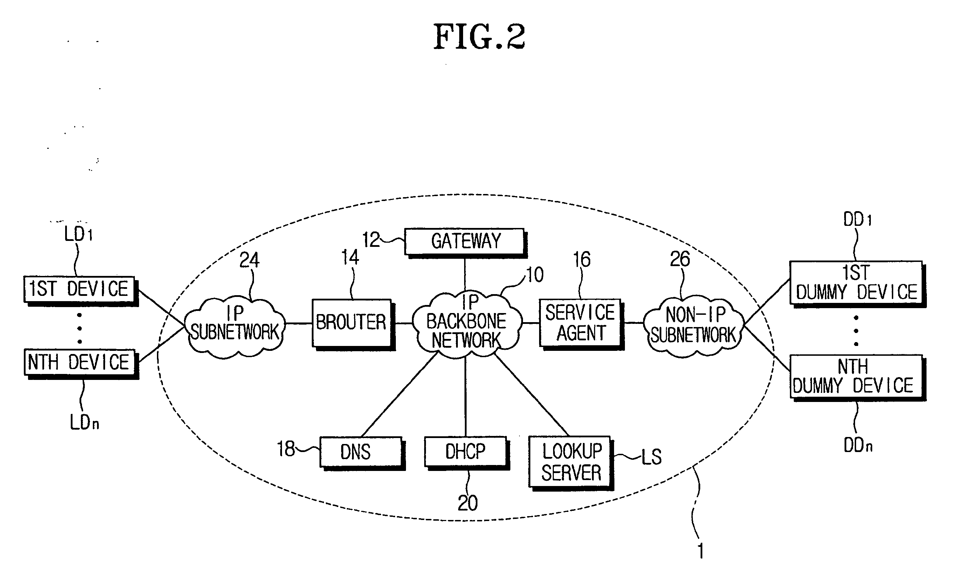

Figure 2 shows the construction of the home network 1 shown in Figure 1.

The home network 1 includes an IP backbone network 10, a gateway 12, a brouter 14, a service agent 16, a DNS server 18, a DHCP server 20, a lookup server LS, an IP subnetwork 24, a non-IP subnetwork 26, first to nth devices LD1 to LDn and first to nth dummy devices DD1 to DDn.

The DHCP server 20 provides dynamic IP addresses to the devices in the home network 1.

The home network 1 uses the dynamic IP addresses which are used only in the home network 1 to designate a plurality of devices connected in the home network 1.

The gateway 12 is an entry node for allowing the home network 1 to communicate with other networks including other home networks which are present outside the home network 1.

The DNS server 18 provides a host name to the devices in the home network 1. The host name may employ a default name which is added by a user or previously designated to show functional meanings of the apparatus.

Among the devices in the home network, intelligent devices that are capable of self-control are connected in the IP subnetwork 24.

The brouter 14 is a bridge and a router which is arranged between the IP backbone network 10 and the IP subnetwork 24 to search a path for an IP packet transmitted between the backbone network 10 and the IP subnetwork 24.

Among the devices in the home network, dummy devices such as a lamp, a door or a washer are connected in the non-IP subnetwork. The dummy devices are incapable of self-control but designed to simply perform regulated operations.

The service agent 16 is arranged between the non-IP subnetwork 26 and the IP backbone network 10 to manage a service to the dummy devices.

Also, the service agent 16 is allocated with the dynamic addresses for the dummy devices, which are connected to the non-IP subnetwork 26, from the DHCP 20, respectively, and manages the allocated dynamic IP addresses.

Also, for the dummy devices, the service agent 16 performs a status management on the matter such as whether the dummy devices are powered on or connected to the home network, etc.

Also for the devices connected to the home network, the lookup server LS stores and manages device information of the devices such as device type, vendor, model name, serial number, etc. and other information of the devices such as dynamic address, ID, etc. in a registration table. Such a registration table is updated whenever the construction of the home network is changed.

Table 1 is an example of the registration table of the devices stored in the lookup server LS.

**Table 1**

| IPAddr | LD IPaddress |
|---|---|
| ServiceTypeSerialNum | LD characteristic ID |
| DeviceUserName | User Designating Information (optional) |
| device[i].deviceType | Ex. TV |
| device[i].manufacturerIcon | Ex.Samsungtv.gif |
| device[i].manufacturerUr1 | Manufacturer Homepage URL |
| device[i].modelIcon | Ex.Pavv.gif |
| device[i].modelUrlcontent | Product Model Homepage URL |
| device[i].modelNum | Model Name |
| device[i].serialNum | Model Serial Number |
| device[i].xmlService[j].object[k] | Used in D2D-level |
| device[i].xmlService[j].command | Command, Can be Performed in LD |
| device[i].xmlService[j].serviceName | Name, Necessary for Performing Service in LD |
| device[i].deviceProperty[m].title | Property Name (Ex.Resolution) |
| device[i].deviceProperty[m].content | Property Information(Ex.PM@HL 1280x720P) |
| i,j,k: at least one, m: at least zero | |

In general, HTML (Hypertext Markup Language) has a fixed tag so that XML (extensible markup Language) is used to compose master.dtd, which will be described later.

Also, the lookup server LS registers ID and a currently allocated common IP address of the home network to the Internet connection providing server SR' to allow external communication to the home network.

As the lookup server LS stores and manages dynamic IP addresses allocated to the devices in the home network, the devices in the home network may mutually exchange information regardless of a network media interface which is used by each of the devices.

Now, description will be made in detail about the operation of the remote service providing server RS in the system for providing a service to the devices in such a home network.

The remote service providing server RS provides service to the devices in the home network which are registered for service in the remote service providing server RS.

For example, the remote service providing server RS provides a push service that is different from the general services that are provided upon request of the user. The push service is periodically provided to a specific device that is registered for the push service.

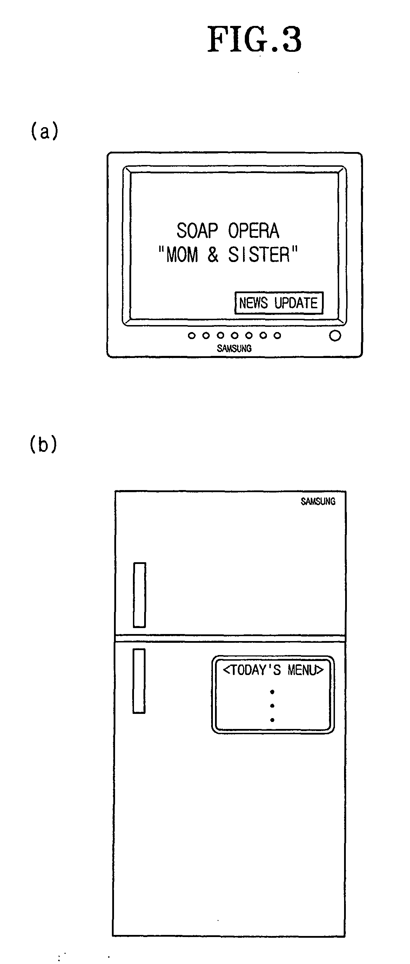

Figure 3 shows an example of a push service provided by the remote service providing server shown in Figure 1, wherein Figure 3A shows a service for transmitting a news update in a certain period to a digital TV, and Figure 3B shows a service for transmitting information in a certain period to an embedded web refrigerator where a web browser is installed.

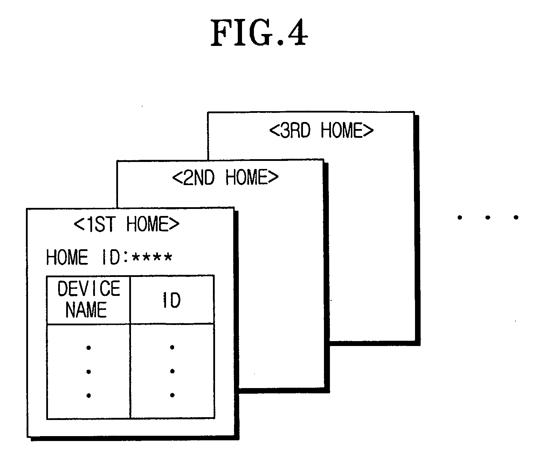

The remote service providing server RS comprises a service registration table of the home network registered for a home service, as shown in Figure 4.

Figure 4 shows an example of the service registration table which is stored in the remote service providing server shown in Figure 1.

As shown in Figure 4, the service registration table stores IDs of the service registered devices, service items and ID of the home network to which the devices are registered.

Such a service table is upgraded when a specific home network is registered for the service or cancels the registration.

The remote service providing server RS provides service to the devices registered in the service registration table according to the service providing period.

Also, prior to providing service, the remote service providing server RS confirms whether the service receiving device is prepared for a reception of service or not.

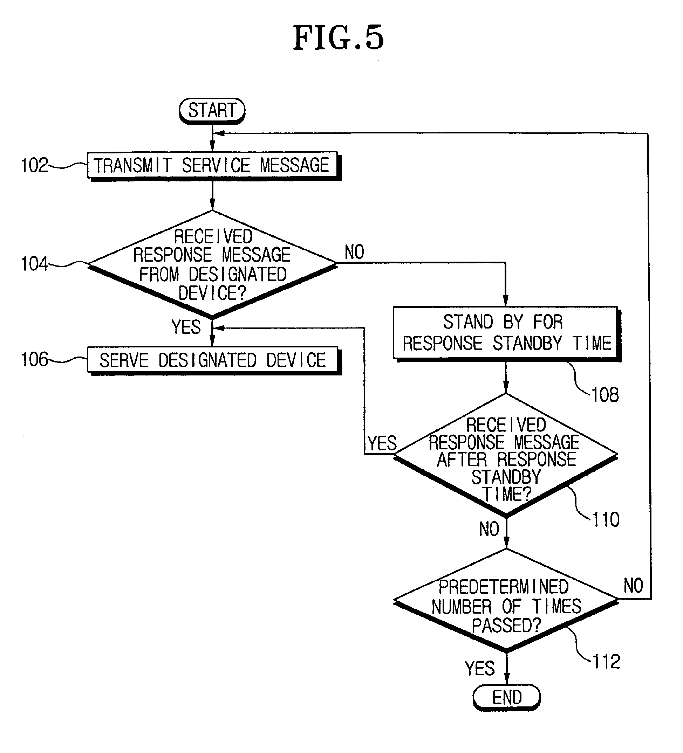

Figure 5 is a flow chart showing a service providing process of the remote service providing server RS.

First, in step S102, the remote service providing server RS transmits a service message to a service receiving device, i.e., an intended recipient device of the service.

The service message checks the status of the service receiving device, and designates an ID of the service receiving device and an ID of the home network to which the service receiving device is registered. Also, the service message contains an internal program that is operated when the service receiving device receives the service message. Format of the service message will be described later.

Then, the remote service providing server RS confirms if a response message is received from the device designated by the service message, reporting that the device can be served (step S104).

If the received response message reports that the designated device can be served, the remote service providing server provides service to the designated device (step S106).

However, if the response message is not received from the designated device, the remote service providing server stands by for a predetermined response standby time (step S108).

After the predetermined time, the remote service providing server confirms if the response message is received, reporting that the designated device can be served (step S110).

If the response message is received, reporting that the device can be served during the response standby time, the remote service providing server RS provides service to the designated device (step S106).

However, if the response message is not received from the designated device after the response standby time has passed, the remote service providing server RS retransmits the service message (step S102).

If the response message is not received even after repeating the foregoing steps for a predetermined number of times, the remote service providing server exits the operation for serving.

While Figure 5 shows one example where the service receiving device does not send a response message when the device is not prepared for the service, the service receiving device may send a response message indicating that the device is not prepared for the service.

Next, a service message transmitting process of the Internet connection providing server SR' will be described.

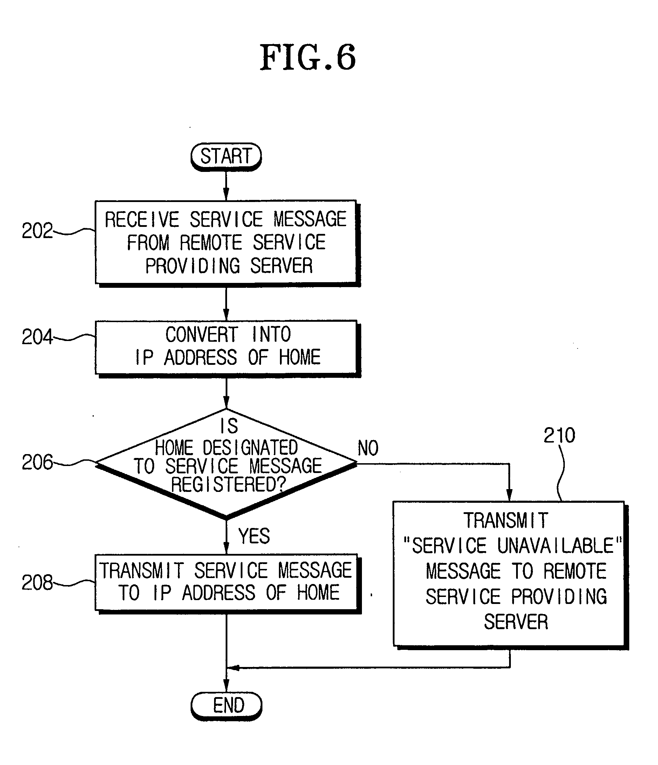

Figure 6 is a flow chart showing the service message transmitting process of the Internet connection providing server SR'.

The Internet connection providing server SR' receives the service message from the remote service providing server RS (step S202), and then converts an ID of the home network recorded in the service message to an IP address (step S204).

Then, the Internet connection providing server SR' confirms if the home network to which the service receiving device is registered is a registered home (or a home having a home network) in the Internet connection providing server SR' (step S206).

If the home associated with the service receiving device is registered in the Internet connection providing server SR', the Internet connection providing server SR' transmits the service message to the IP address of the home (step S208).

However, if the home of the service receiving device is not registered in the Internet connection providing server SR', the Internet connection providing server SR' transmits a message mentioning that service is unavailable to the remote service providing server RS (step S210).

Next, a service message transmitting process of the lookup server LS in the home network will be described.

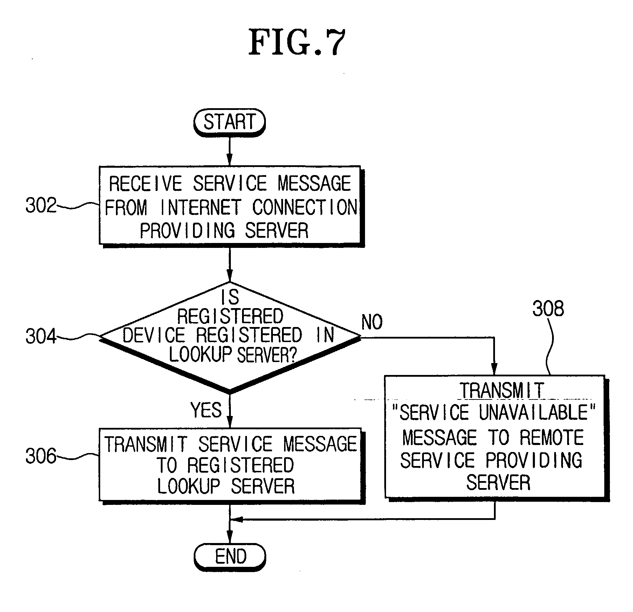

Figure 7 is a flow chart showing the service message transmitting process of the lookup server LS in the home network.

The lookup server LS in the home network receives the service message which reports ID information of the service receiving device to the IP address of the home corresponding to home ID from the Internet connection providing server SR' (step S302).

Then, the lookup server LS confirms if the corresponding device is currently registered (step S304), wherein Table 1 is referred to for confirming the service receiving device.

If the service receiving device is confirmed as registered in the lookup server LS, the lookup server LS transmits the service message to a corresponding dynamic address of the service receiving device (step S306).

However, if the service receiving device is conformed as unregistered, the lookup server LS transmits a service unavailable message to the remote service providing server RS (step S308).

Meanwhile, upon receiving the service message mentioning that service will be started, the service receiving device operates the internal program provided from the remote service providing server RS and transmits a response message reporting that preparation is completed for service to the remote service providing server RS.

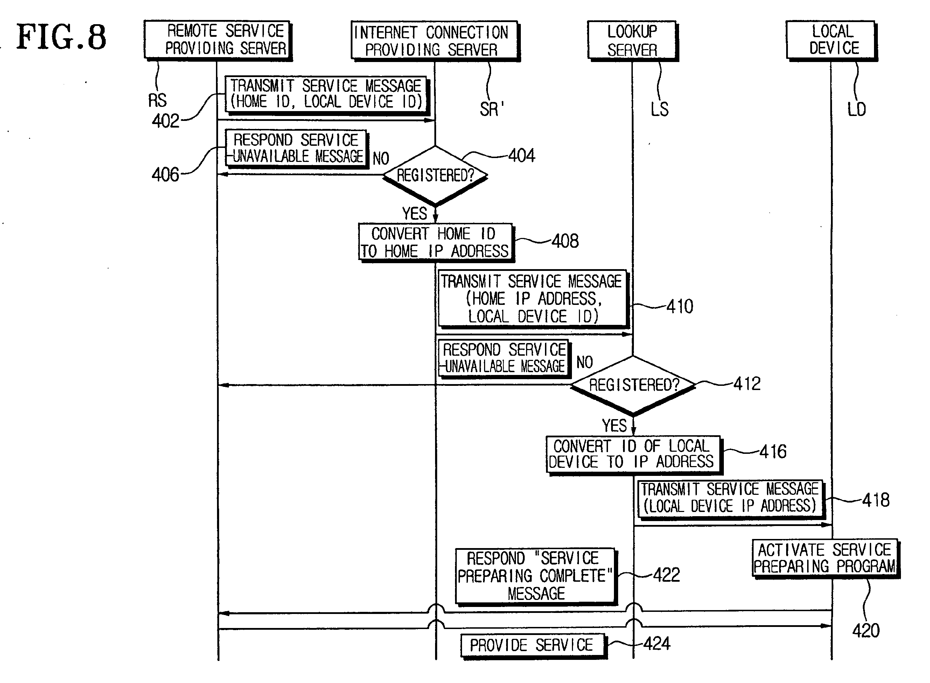

Figure 8 shows a signal flow of a method for providing a service to the home network according to a preferred embodiment of the present invention.

Referring to Figure 8, the remote service providing server RS transmits a service message containing an ID of the service receiving device and an ID of the home to which the device is registered to the Internet connection providing server SR' (step S402).

The Internet connection providing server SR' receives the service message from the remote service providing server RS and confirms if the home designated in the received service message is registered in the Internet connection providing server SR' (step S404).

If the home designated in the received service message is not registered in the Internet connection providing server SR', the Internet connection providing server SR' transmits a "service unavailable" response message (step S406).

If the home designated in the received service message is registered, the Internet connection providing server SR' converts the ID of the home designated in the service message to an IP address of the corresponding home (step S408), and transmits a service message containing the ID of the service receiving device and the IP address of the home to which the device is registered to the corresponding home (step S410).

The lookup server LS of the home network receives the service message from the Internet connection providing server SR', and confirms if the device designated in the received service message is registered in the lookup server LS (step S412).

If the device designated in the received service message is not registered in the lookup server LS, the lookup server LS transmits a "service unavailable" message to the remote service providing server RS (step S414).

However, if the device designated in the received service message is registered in the lookup server LS, the lookup server LS converts the ID of the device designated in the received service message to a dynamic IP address of the corresponding device (step S416), and transmits the service message to the service receiving device (step S418).

Then, the service receiving device activates a service preparing program (step S420), and transmits a confirmation message to the remote service providing server RS indicating that preparation is complete (step S422).

Then, the remote service providing server RS provides a corresponding service to the service receiving device (step S424).

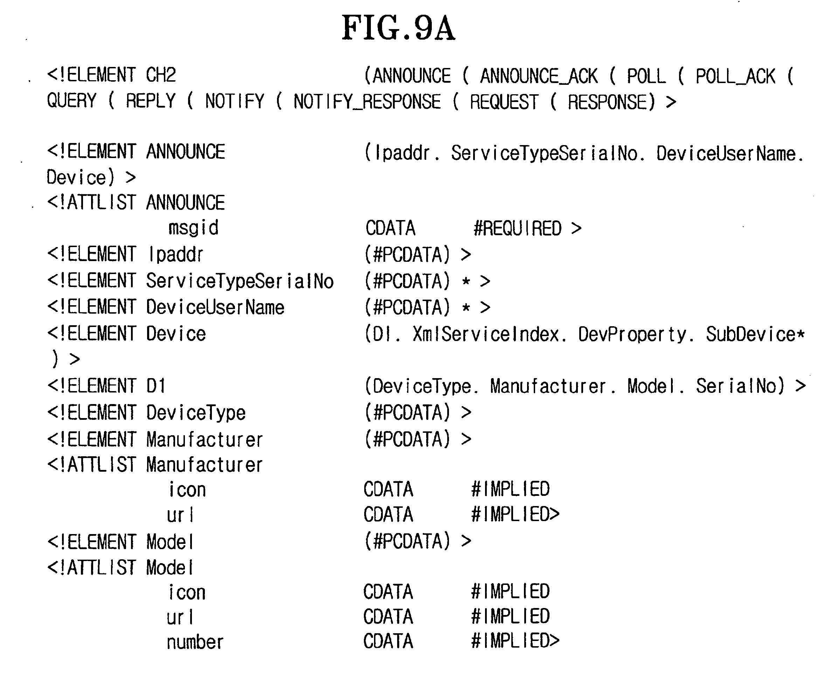

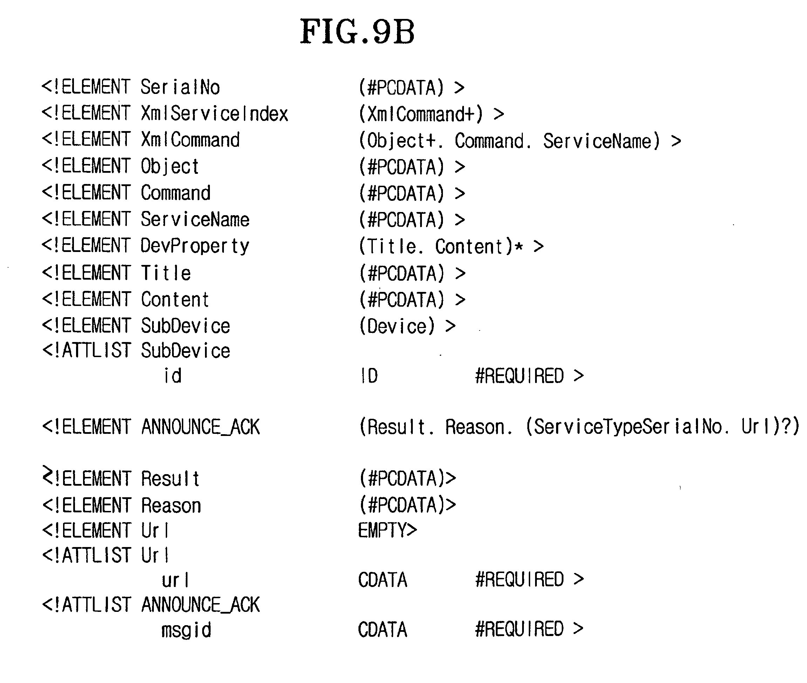

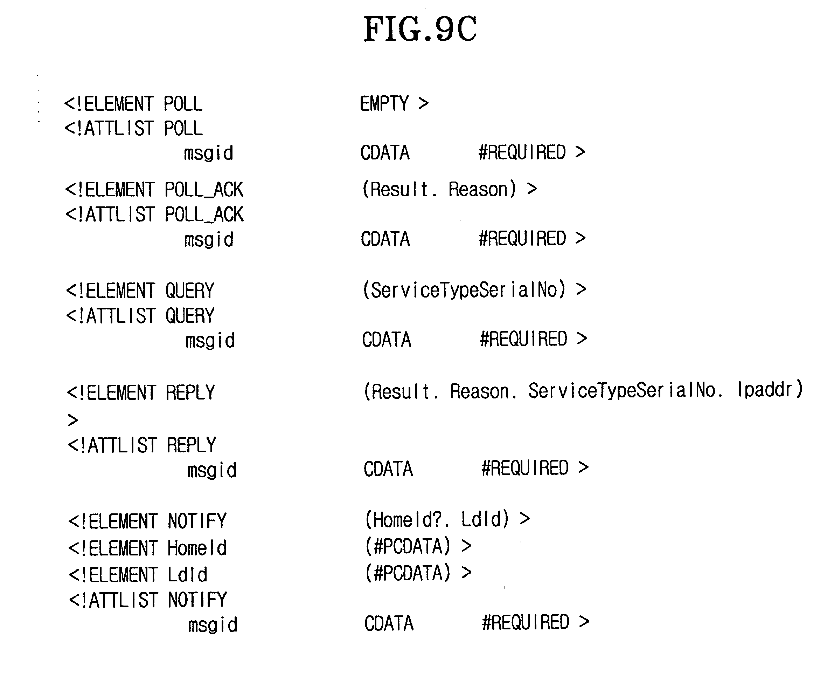

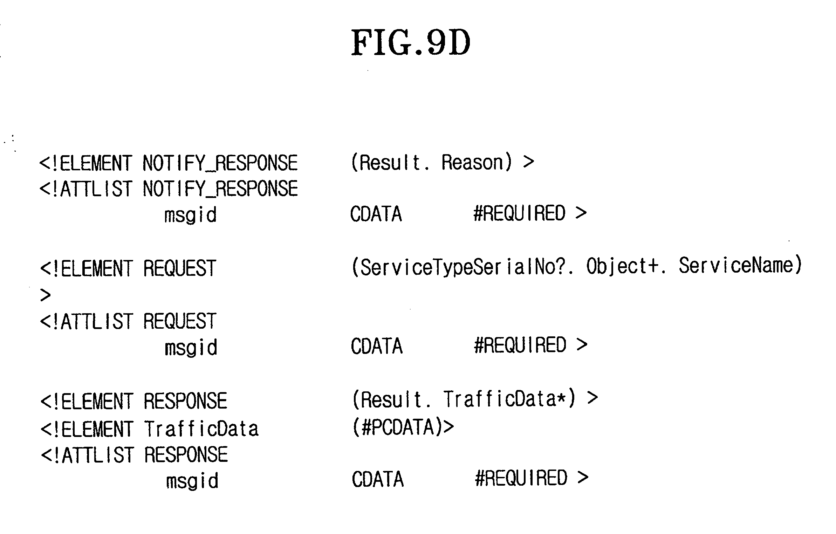

Figures 9A through 9D show program source code of an example of a master.dtd which is stored in the lookup server LS.

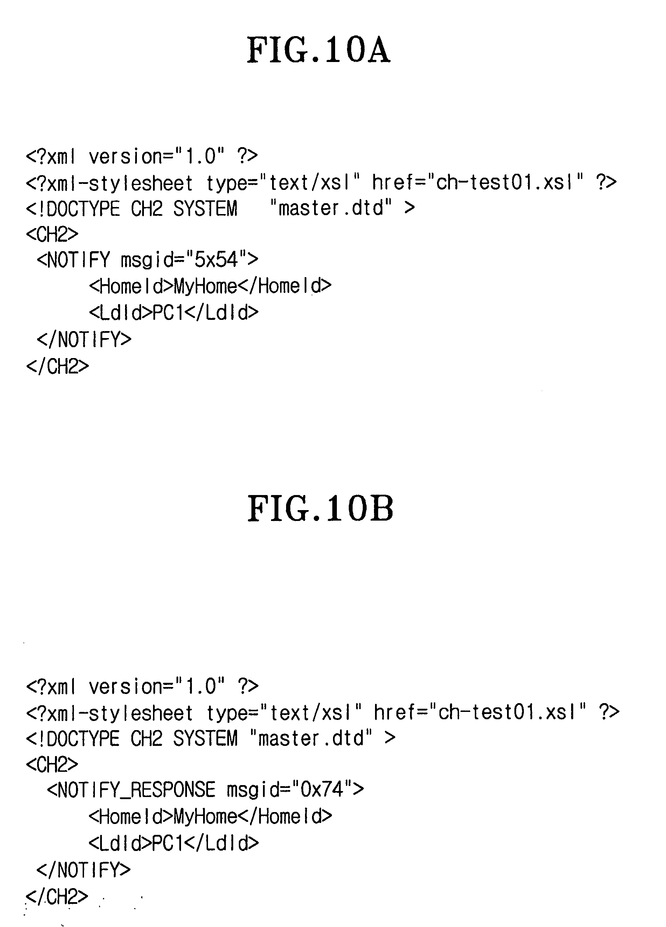

Figure 10A shows source code of a service message, and Figure 10B shows source code of a service response message.

A type of the service message is composed based upon contents of the master.dtd and XML encoded.

The response message about the service message includes result and reason.

The designated device is served only when the response message about the service message is: Result=SUCCESS; Reason=SERVICE_READY.

According to the system for serving the device in the home network and the method thereof, the devices connected in the home network can receive the services that are provided outside the home network.

## Claims

1. A system for externally providing a service to a specific device in a home network (1) having a plurality of devices (LD1,DD1) connected thereto, said system comprising:
a service receiving device (LD1,DD1) which is registered to said home network and is configured to receive a service; and
a remote service providing server (RS) arranged to be in communication with said service receiving device for providing the service;
wherein
said remote service providing server (RS) is configured to confirm a service receptiveness of said service receiving device by transmitting a service message to said service receiving device (LD1,DD1), wherein said service message contains an internal program that is operated by the service receiving device, and receiving a confirmation message in reply when the service receiving device (LD1,DD1) is capable of receiving the service, wherein the confirmation message is sent by the service receiving device reporting that preparation is completed for service, and wherein
the remote service providing server (RS) is configured to transmit the service to the service receiving device (LD1,DD1) when the service receptiveness of said service receiving device (LD1,DD1) is confirmed by the confirmation message.

2. The system of claim 1, wherein said remote service providing server (RS) is adapted to store an Identification ID of said service receiving devices (LD1,DD1) that are registered in said remote service providing server (RS) for the service.

3. The system of claim 1 or 2, wherein said remote service providing server (RS) is adapted to periodically output a push service which is received by said service receiving device (LD1,DD1) as a specific service.

4. The system of claim 1, 2 or 3, wherein the service message of said remote service providing server (RS) includes identification information for said service receiving device (LD1,DD1) and said home network (1), to which said service receiving device is registered.

5. The system of any preceding claim, further comprising:
an Internet connection providing server (SR) adapted to receive the service message from said remote service providing server (RS) and transmit the service message to the home network (1,...,n) designated by the service message; and
a lookup server (LS) which receives the service message from said Internet connection providing server (SR) and transmits the received service message to the device (LD1,DD1) designated by the service message.

6. The system of claim 5, wherein said Internet connection providing server (SR) is adapted to store an Identification ID and a global IP address of the home network (1), which is registered in said Internet connection providing server (SR).

7. The system of claim 5 or 6, wherein said lookup server (LS) in the home network (1) is adapted to store an Identification ID and a dynamic IP address of the devices (LD1,DD1) connected to the home network (1) that are registered in said lookup server (LS).

8. The system of any of claims 5 to 7, wherein said Internet connection providing server (SR) is adapted to confirm if the home network (1) designated by the received service message is registered in said Internet connection providing server (SR), and is adapted to convert the Identification ID of the home network (1) designated by the service message to an IP address of the corresponding home network (1) to transmit the converted service message.

9. The system of any of claims 5 to 8, wherein said lookup server (LS) is adapted to confirm if said service receiving device (LD1,DD1) designated by the received service message is registered in said lookup server (LS), and is adapted to convert the Identification ID of said service receiving device (LD1,DD1) designated by the received service message to an IP address of the corresponding device.

10. A method for externally providing a service to a specific device (LD1,DD1) in a home network (1) having a plurality of devices connected thereto,
the method comprising :
(i) transmitting a service message from a remote service providing server (RS) to a service receiving device (LD1,DD1) which is an intended recipient of the service, wherein said service message contains an internal program that is operated by the service receiving device; and
(ii) receiving a confirmation message from the service receiving device in reply to the service message, the confirmation message to confirm that the service receiving device (LD1, DD1) is capable of receiving the service, wherein the confirmation message is sent by the service receiving device reporting that preparation is completed for service and
(iii) providing the service to said service receiving device (LD1,DD1) when the confirmation message is affirmatively received.

11. The method of claim 10, further comprising the step of storing an Identification ID of a device (LD1,DD1) which is registered for service.

12. The method of claim 10 or 11, further comprising the step of periodically providing a push service to selected service receiving devices (LD1,DD1).

13. The method of claim 10, 11 or 12, wherein the service message is transmitted containing information about said service receiving device (LD1,DD1) and a home network (1) to which said service receiving device (LD1,DD1) is registered.

14. The method of claim 10, 11, 12 or 13 further comprising the steps of:
(iii) receiving the service message in an Internet connection providing server (SR) and transmitting the received service message to a home network (1) designated by the service message; and
(iv) receiving the service message from said Internet connection providing server (SR) in a lookup server (LS) and transmitting the received service message to a device (LD1,DD1) designated by the service message.

15. The method of claim 14, further comprising the step of storing an Identification ID and a global IP address of the home network (1) which is registered in said Internet connection providing server (SR).

16. The method of claim 14 or 15, further comprising the step of storing an Identification ID and a dynamic IP address of the devices (LD1,DD1) which are registered in said lookup server (LS) of the home network (1).

17. The method of claim 14, 15 or 16, wherein said step (iii) of receiving the service message in said Internet connection providing server (SR) comprises the steps of:
confirming if the home network (1) designated by the received service message is registered in said Internet connection providing server (SR); and
converting an Identification ID of the home network (1) designated by the service message to an IP address of the corresponding home network (1) to transmit the converted service message.

18. The method of claim 14, 15, 16 or 17, wherein said step (iv) of receiving the service message in a lookup server (RS) comprises the steps of:
confirming if said service receiving device (LD1,DD1) designated by the received service message is registered in said lookup server (LS); and
converting an Identification ID of said service receiving device (LD1,DD1) designated by the received service message to an IP address of the corresponding device.

## Patentansprüche

1. System zum externen Bereitstellen eines Dienstes für eine spezifische Einrichtung in einem Heimnetzwerk (1), mit dem mehrere Einrichtungen (LD1, DD1) verbunden sind, wobei das System Folgendes umfasst:
eine Dienstempfangseinrichtung (LD1, DD1), die in dem Heimnetzwerk registriert und dafür ausgelegt ist, einen Dienst zu empfangen; und
einen Ferndienst-Bereitstellungsserver (RS), der sich zur Bereitstellung des Dienstes in Kommunikation mit der Dienstempfangseinrichtung befindet;
wobei
der Ferndienst-Bereitstellungsserver (RS) dafür ausgelegt ist, eine Dienstempfangsbereitschaft der Dienstempfangseinrichtung durch Senden einer Dienstnachricht zu der Dienstempfangseinrichtung (LD1, DD1) zu bestätigen, wobei die Dienstnachricht ein internes Programm enthält, das von der Dienstempfangseinrichtung betrieben wird, und als Antwort eine Bestätigungsnachricht zu empfangen, wenn die Dienstempfangseinrichtung (LD1, DD1) in der Lage ist, den Dienst zu empfangen, wobei die Bestätigungsnachricht **dadurch** gesendet wird, dass die Dienstempfangseinrichtung meldet, dass Vorbereitung für Dienst abgeschlossen ist, und wobei
der Ferndienst-Bereitstellungsserver (RS) dafür ausgelegt ist, den Dienst zu der Dienstempfangseinrichtung (LD1, DD1) zu senden, wenn die Dienstempfangsbereitschaft der Dienstempfangseinrichtung (LD1, DD1) durch die Bestätigungsnachricht bestätigt wird.

2. System nach Anspruch 1, wobei der Ferndienst-Bereitstellungsserver (RS) dafür ausgelegt ist, eine Identifikation ID der Dienstempfangseinrichtungen (LD1, DD1) zu speichern, die in dem Ferndienst-Bereitstellungsserver (RS) für den Dienst registriert sind.

3. System nach Anspruch 1 oder 2, wobei der Ferndienst-Bereitstellungsserver (RS) dafür ausgelegt ist, periodisch einen Push-Dienst auszugeben, der als ein spezifischer Dienst durch die Dienstempfangseinrichtung (LD1, DD1) empfangen wird.

4. System nach Anspruch 1, 2 oder 3, wobei die Dienstnachricht des Ferndienst-Bereitstellungsservers (RS) Identifikationsinformationen für die Dienstempfangseinrichtung (LD1, DD1) und das Heimnetzwerk (1), bei dem die Dienstempfangseinrichtung registriert ist, umfasst.

5. System nach einem der vorhergehenden Ansprüche, ferner umfassend:
einen Internetverbindungs-Bereitstellungsserver (SR), der dafür ausgelegt ist, die Dienstnachricht von dem Ferndienst-Bereitstellungsserver (RS) zu empfangen und die Dienstnachricht zu dem durch die Dienstnachricht designierten Heimnetzwerk (1, ..., n) zu senden; und
einen Nachschlageserver (LS), der die Dienstnachricht von dem Internetverbindungs-Bereitstellungsserver (SR) empfängt und die empfangene Dienstnachricht zu der durch die Dienstnachricht designierten Einrichtung (LD1, DD1) sendet.

6. System nach Anspruch 5, wobei der Internetverbindungs-Bereitstellungsserver (SR) dafür ausgelegt ist, eine Identifikation ID und eine globale IP-Adresse des Heimnetzwerks (1) zu speichern, das in dem Internetverbindungs-Bereitstellungsserver (SR) registriert ist.

7. System nach Anspruch 5 oder 6, wobei der Nachschlageserver (LS) in dem Heimnetzwerk (1) dafür ausgelegt ist, eine Identifikation ID und eine dynamische IP-Adresse der mit dem Heimnetzwerk (1) verbundenen Einrichtungen (LD1, DD1), die in dem Nachschlageserver (LS) registriert sind, zu speichern.

8. System nach einem der Ansprüche 5 bis 7, wobei der Internetverbindungs-Bereitstellungsserver (SR) dafür ausgelegt ist, zu bestätigen, ob das durch die empfangene Dienstnachricht designierte Heimnetzwerk (1) in dem Internetverbindungs-Bereitstellungsserver (SR) registriert ist, und dafür ausgelegt ist, die Identifikation ID des durch die Dienstnachricht designierten Heimnetzwerks (1) in eine IP-Adresse des entsprechenden Heimnetzwerks (1) zu konvertieren, um die konvertierte Dienstnachricht zu senden.

9. System nach einem der Ansprüche 5 bis 8, wobei der Nachschlageserver (LS) dafür ausgelegt ist, zu bestätigen, ob die durch die empfangene Dienstnachricht designierte Dienstempfangseinrichtung (LD1, DD1) in dem Nachschlageserver (LS) registriert ist, und dafür ausgelegt ist, die Identifikation ID der durch die empfangene Dienstnachricht designierten Dienstempfangseinrichtung (LD1, DD1) in eine IP-Adresse der entsprechenden Einrichtung zu konvertieren.

10. Verfahren zum externen Bereitstellen eines Dienstes für eine spezifische Einrichtung (LD1, DD1) in einem Heimnetzwerk (1), mit dem mehrere Einrichtungen verbunden sind,
wobei das Verfahren die folgenden Schritte umfasst:
(i) Senden einer Dienstnachricht von einem Ferndienst-Bereitstellungsserver (RS) zu einer Dienstempfangseinrichtung (LD1, DD1), die ein beabsichtigter Empfänger des Dienstes ist, wobei die Dienstnachricht ein internes Programm enthält, das durch die Dienstempfangseinrichtung betrieben wird; und
(ii) Empfangen einer Bestätigungsnachricht von der Dienstempfangseinrichtung als Antwort auf die Dienstnachricht, wobei die Bestätigungsnachricht bestätigen soll, dass die Dienstempfangseinrichtung (LD1, DD1) in der Lage ist, den Dienst zu empfangen, wobei die Bestätigungsnachricht **dadurch** gesendet wird, dass die Dienstempfangseinrichtung meldet, dass Vorbereitung für Dienst abgeschlossen ist; und
(iii) Bereitstellen des Dienstes für die Dienstempfangseinrichtung (LD1, DD1), wenn die Bestätigungsnachricht affirmativ empfangen wird.

11. Verfahren nach Anspruch 10, ferner mit dem Schritt des Speicherns einer Identifikation ID einer Einrichtung (LD1, DD1), die für Dienst registriert ist.

12. Verfahren nach Anspruch 10 oder 11, ferner mit dem Schritt des periodischen Bereitstellens eines Push-Dienstes für gewählte Dienstempfangseinrichtungen (LD1, DD1).

13. Verfahren nach Anspruch 10, 11 oder 12, wobei die Dienstnachricht einschließlich Informationen über die Dienstempfangseinrichtung (LD1, DD1) und ein Heimnetzwerk (1), bei dem die Dienstempfangseinrichtung (LD1, DD1) registriert ist, gesendet wird.

14. Verfahren nach Anspruch 10, 11, 12 oder 13, ferner mit den folgenden Schritten:
(iii) Empfangen der Dienstnachricht in einem Internetverbindungs-Bereitstellungsserver (SR) und Senden der empfangenen Dienstnachricht zu einem durch die Dienstnachricht designierten Heimnetzwerk (1); und
(iv) Empfangen der Dienstnachricht von dem Internetverbindungs-Bereitstellungsserver (SR) in einem Nachschlageserver (LS) und Senden der empfangenen Dienstnachricht zu einer durch die Dienstnachricht designierten Einrichtung (LD1, DD1).

15. Verfahren nach Anspruch 14, ferner mit dem Schritt des Speicherns einer Identifikation ID und einer globalen IP-Adresse des Heimnetzwerks (1), das in dem Internetverbindungs-Bereitstellungsserver (SR) registriert ist.

16. Verfahren nach Anspruch 14 oder 15, ferner mit dem Schritt des Speicherns einer Identifikation ID und einer dynamischen IP-Adresse der Einrichtungen (LD1, DD1), die in dem Nachschlageserver (LS) des Heimnetzwerks (1) registriert sind.

17. Verfahren nach Anspruch 14, 15 oder 16, wobei der Schritt (iii) des Empfangens der Dienstnachricht in dem Internetverbindungs-Bereitstellungsserver (SR) die folgenden Schritte umfasst:
Bestätigen, ob das durch die empfangene Dienstnachricht designierte Heimnetzwerk (1) in dem Internetverbindungs-Bereitstellungsserver (SR) registriert ist; und
Konvertieren einer Identifikation ID des durch die Dienstnachricht designierten Heimnetzwerks (1) in eine IP-Adresse des entsprechenden Heimnetzwerks (1), um die konvertierte Dienstnachricht zu senden.

18. Verfahren nach Anspruch 14, 15, 16 oder 17, wobei der Schritt (iv) des Empfangens der Dienstnachricht in einem Nachschlageserver (RS) die folgenden Schritte umfasst:
Bestätigen, ob die durch die empfangene Dienstnachricht designierte Dienstempfangseinrichtung (LD1, DD1) in dem Nachschlageserver (LS) registriert ist; und
Konvertieren einer Identifikation ID der durch die empfangene Dienstnachricht designierten Dienstempfangseinrichtung (LD1, DD1) in eine IP-Adresse der entsprechenden Einrichtung.

## Revendications

1. Système destiné à fournir de manière externe un service à un dispositif spécifique dans un réseau domestique (1) auquel sont connectés une pluralité de dispositifs (LD1, DD1), ledit système comprenant :
un dispositif de réception de service (LD1, DD1) qui est enregistré sur ledit réseau domestique et est configuré pour recevoir un service ; et
un serveur fournisseur de service distant (RS) conçu de façon à être en communication avec ledit dispositif de réception de service pour fournir le service ;
dans lequel
ledit serveur fournisseur de service distant (RS) est configuré pour confirmer une aptitude à la réception de service dudit dispositif de réception de service en transmettant un message de service audit dispositif de réception de service (LD1, DD1), dans lequel ledit message de service contient un programme interne qui est mis en oeuvre par le dispositif de réception de service, et en recevant un message de confirmation en réponse à cela lorsque le dispositif de réception de service (LD1, DD1) est capable de recevoir le service,
dans lequel le message de confirmation est envoyé par le dispositif de réception de service qui fournit un rapport selon lequel la préparation au service est achevée, et dans lequel
le serveur fournisseur de service distant (RS) est configuré pour transmettre le service au dispositif de réception de service (LD1, DD1) lorsque l'aptitude à la réception de service dudit dispositif de réception de service (LD1, DD1) est confirmée par le message de confirmation.

2. Système selon la revendication 1, dans lequel ledit serveur fournisseur de service distant (RS) est conçu pour stocker une identification ID desdits dispositifs de réception de service (LD1, DD1) qui sont enregistrés sur ledit serveur fournisseur de service distant (RS) pour le service.

3. Système selon la revendication 1 ou 2, dans lequel ledit serveur fournisseur de service distant (RS) est conçu pour délivrer périodiquement un service du type pousser qui est reçu par ledit dispositif de réception de service (LD1, DD1) en tant que service spécifique.

4. Système selon la revendication 1, 2 ou 3, dans lequel le message de service dudit serveur fournisseur de service distant (RS) comprend des informations d'identification destinées audit dispositif de réception de service (LD1, DD1) et audit réseau domestique (1) sur lequel ledit dispositif de réception de service est enregistré.

5. Système selon l'une quelconque des revendications précédentes, comprenant en outre :
un serveur fournisseur de connexion Internet (SR) conçu pour recevoir le message de service dudit serveur fournisseur de service distant (RS) et transmettre le message de service au réseau domestique (1,..., n) désigné par le message de service ; et
un serveur de consultation (LS) qui reçoit le message de service dudit serveur fournisseur de connexion Internet (SR) et transmet le message de service reçu au dispositif (LD1, DD1) désigné par le message de service.

6. Système selon la revendication 5, dans lequel ledit serveur fournisseur de connexion Internet (SR) est conçu pour stocker une identification ID et une adresse IP globale du réseau domestique (1), qui est enregistrée sur ledit serveur fournisseur de connexion Internet (SR).

7. Système selon la revendication 5 ou 6, dans lequel ledit serveur de consultation (LS) présent sur le réseau domestique (1) est conçu pour stocker une identification ID et une adresse IP dynamique des dispositifs (LD1, DD1) connectés au réseau domestique (1), qui sont enregistrées sur ledit serveur de consultation (LS).

8. Système selon l'une quelconque des revendications 5 à 7, dans lequel ledit serveur fournisseur de connexion Internet (SR) est conçu pour confirmer que le réseau domestique (1) désigné par le message de service reçu est enregistré sur ledit serveur fournisseur de connexion Internet (SR) et est conçu pour convertir l'identification ID du réseau domestique (1) désigné par le message de service en une adresse IP du réseau domestique correspondant (1) afin de transmettre le message de service converti.

9. Système selon l'une quelconque des revendications 5 à 8, dans lequel ledit serveur de consultation (LS) est conçu pour confirmer que ledit dispositif de réception de service (LD1, DD1) désigné par le message de service reçu est enregistré sur ledit serveur de consultation (LS) et est conçu pour convertir l'identification ID dudit dispositif de réception de service (LD1, DD1) désigné par le message de service reçu en une adresse IP du dispositif correspondant.

10. Procédé destiné à fournir de manière externe un service à un dispositif spécifique (LD1, DD1) dans un réseau domestique (1) auquel sont connectés une pluralité de dispositifs, le procédé consistant à :
(i) transmettre un message de service d'un serveur fournisseur de service distant (RS) à un dispositif de réception de service (LD1, DD1) qui est un destinataire voulu du service, dans lequel ledit message de service contient un programme interne qui est mis en oeuvre par le dispositif de réception de service ; et
(ii) recevoir un message de confirmation du dispositif de réception de service en réponse au message de service, le message de confirmation étant destiné à confirmer que le dispositif de réception de service (LD1, DD1) est capable de recevoir le service, dans lequel le message de confirmation est envoyé par le dispositif de réception de service qui fournit un rapport selon lequel la préparation au service est achevée, et
(iii) fournir le service audit dispositif de réception de service (LD1, DD1) lorsque le message de confirmation est reçu de façon affirmative.

11. Procédé selon la revendication 10, comprenant en outre l'étape consistant à stocker une identification ID d'un dispositif (LD1, DD1), qui est enregistrée pour le service.

12. Procédé selon la revendication 10 ou 11, comprenant en outre l'étape consistant à fournir périodiquement un service du type pousser à des dispositifs de réception de service sélectionnés (LD1, DD1).

13. Procédé selon la revendication 10, 11 ou 12, dans lequel le message de service transmis contient des informations concernant ledit dispositif de réception de service (LD1, DD1) et un réseau domestique (1) sur lequel est enregistré ledit dispositif de réception (LD1, DD1).

14. Procédé selon la revendication 10, 11, 12 ou 13, comprenant en outre les étapes consistant à :
(iii) recevoir le message de service sur un serveur fournisseur de connexion Internet (SR) et transmettre le message de service reçu à un réseau domestique (1) désigné par le message de service ; et
(iv) recevoir le message de service dudit serveur fournisseur de connexion Internet (SR) sur un serveur de consultation (LS) et transmettre le message de service reçu à un dispositif (LD1, DD1) désigné par le message de service.

15. Procédé selon la revendication 14, comprenant en outre l'étape consistant à stocker une identification ID et une adresse IP globale du réseau domestique (1) qui est enregistré sur ledit serveur fournisseur de connexion Internet (SR).

16. Procédé selon la revendication 14 ou 15, comprenant en outre l'étape consistant à stocker une identification ID et une adresse IP dynamique des dispositifs (LD1, DD1) qui sont enregistrés sur ledit serveur de consultation (LS) du réseau domestique (1).

17. Procédé selon la revendication 14, 15 ou 16, dans lequel ladite étape (iii) consistant à recevoir le message de service sur ledit serveur fournisseur de connexion Internet (SR) comprend les étapes consistant à :
confirmer que le réseau domestique (1) désigné par le message de service reçu est enregistré sur ledit serveur fournisseur de connexion Internet (SR) ; et
convertir une identification ID du réseau domestique (1) désigné par le message de service en une adresse IP du réseau domestique correspondant (1) afin de transmettre le message de service converti.

18. Procédé selon la revendication 14, 15, 16 ou 17, dans lequel ladite étape (iv) consistant à recevoir le message de service sur un serveur de consultation (RS) comprend les étapes consistant à :
confirmer que ledit dispositif de réception de service (LD1, DD1) désigné par le message de service reçu est enregistré sur ledit serveur de consultation (LS) ; et
convertir une identification ID dudit dispositif de réception de service (LD1, DD1) désigné par le message de service reçu en une adresse IP du dispositif correspondant.
